(19) Europäisches Patentamt / European Patent Office / Office européen des brevets

(11) **EP 1 906 202 B1**

(12) **EUROPEAN PATENT SPECIFICATION**

(45) Date of publication and mention
of the grant of the patent:
**27.09.2017 Bulletin 2017/39**

(51) Int Cl.:
*G01S 19/48* (2010.01)          *G01S 19/49* (2010.01)
*G01S 5/14* (2006.01)           *G08G 1/09* (2006.01)
*G01C 21/26* (2006.01)          *G01C 21/28* (2006.01)
*G08G 1/0962* (2006.01)

(21) Application number: **07113836.6**

(22) Date of filing: **06.08.2007**

(54) **Vehicle position detection system**

**System zur Erkennung der Position eines Fahrzeugs**

**Système de détection de position de véhicule**

(84) Designated Contracting States:
**DE FR GB IT**

(30) Priority: **29.09.2006 JP 2006268596**

(43) Date of publication of application:
**02.04.2008 Bulletin 2008/14**

(73) Proprietor: **HONDA MOTOR CO., LTD.**
**Tokyo 107-8556 (JP)**
Designated Contracting States:
**DE FR GB IT**

(72) Inventors:
• **Katayama, Mutsumi**
**c/o Honda R&D Co., Ltd**
**Saitama 351-0193 (JP)**
• **Maruyama, Kazuyuki**
**c/o Honda R&D Co., Ltd**
**Saitama 351-0193 (JP)**
• **Kushida, Kazumitsu**
**c/o Honda R&D Co., Ltd**
**Saitama 351-0193 (JP)**

(74) Representative: **Rupp, Christian**
**Mitscherlich PartmbB**
**Patent- und Rechtsanwälte**
**Sonnenstraße 33**
**80331 München (DE)**

(56) References cited:
**JP-A- 2006 058 130     US-B1- 6 349 259**
**US-B1- 6 405 132**

• **PANG G ET AL: "Vehicle Location and Navigation Systems based on LEDs" PROCEEDINGS OF THE WORLD CONGRESS ON INTELLIGENT TRANSPORT SYSTEMS, XX, XX, no. 5th, 12 October 1998 (1998-10-12), page 8PP, XP007903688**
• **GRANTHAM K H PANG ET AL: "LED Location Beacon System Based on Processing of Digital Images" IEEE TRANSACTIONS ON INTELLIGENT TRANSPORTATION SYSTEMS, IEEE, NEW YORK, NY, US, vol. 2, no. 3, September 2001 (2001-09), XP011028397 ISSN: 1524-9050**
• **HUGH SING LIU ET AL: "Positioning Beacon System Using Digital Camera and LEDs" IEEE TRANSACTIONS ON VEHICULAR TECHNOLOGY, IEEE SERVICE CENTER, PISCATAWAY, NJ, US, vol. 52, no. 2, March 2003 (2003-03), XP011080813 ISSN: 0018-9545**

## Description

The present invention relates to a vehicle position detection system, and more particularly to a vehicle position detection system which detects a vehicle position by making use of GPS (Global positioning system) signals and light beacon information.

Conventionally, as a device which detects a position of an own vehicle, there has been used a device which makes use of GPS signals (for example, see patent document 1).

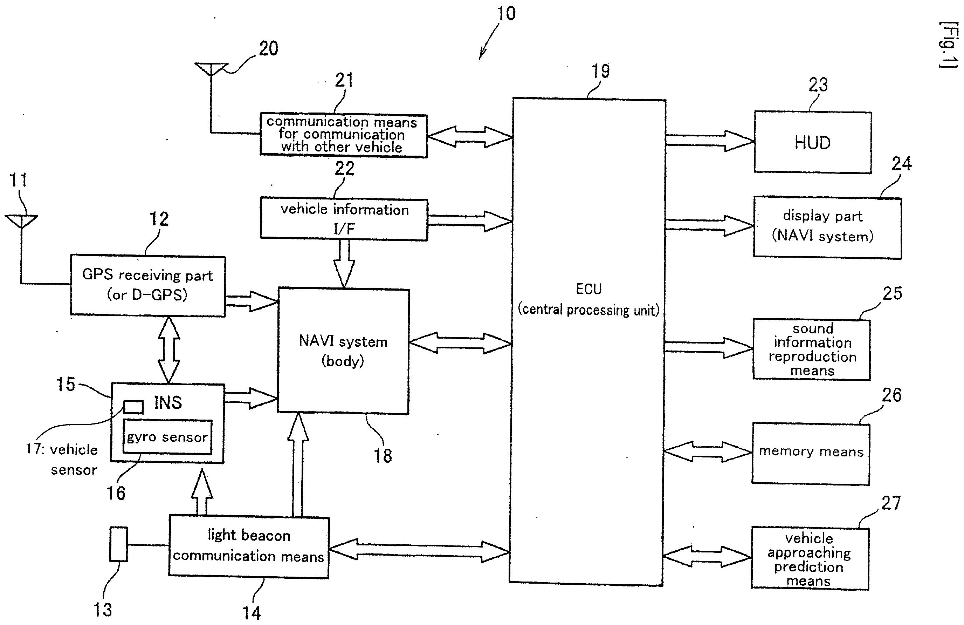

Japanese Patent 3773040 (Fig. 1, paragraph number [0031])

As shown in Fig. 1 of patent document 1, a DGPS 13 which receives GPS signals via an antenna ATgps (symbol described in patent document 1 being used) measures a present position of an own vehicle.

Here, an error of the position detected based on the GPS signals is considered to be 30 meter. There exists expectation for making the error between the detected position and an actual position small.

The document XP007903688 (Pang G et al), 12. Oktober 1998 shows a vehicle location and a navigation system based on LEDs. The document aims at a system for enhancing the cumulative errors respectively for providing an enhancement of a "dead reckoning navigation device" which thus corrects a position on a provided map due to position information provided by the LEDs in traffic lights.

The document US 6,405,132 B1 shows a collision prevention system, which relies solely on GPS signals. The system shown there is designed to tolerate temporary losses of the GPS signal up to a few minutes. This is achieved by using an Inertial Navigation System.

The document US 6,349,259 B1 shows a position detection system encompassing a parallel use of a GPS position detection and a reception of a light beacon for determining a vehicle position. Moreover, the document shows using the information of the light beacon, if the provided position information is more accurate than the information provided by the GPS positioning system.

Accordingly, it is an object of the present invention to provide a vehicle position detection system which can detect a vehicle position with higher accuracy.

The invention is defined in accordance with the appended claims.

In the invention according to claim 1, the vehicle position detection system includes the central processing unit which corrects the position of the own vehicle based on the light beacon information upon reception of the light beacon information by the light beacon communication means mounted on the own vehicle.

Since the light beacon is fixedly installed on a ground, the light beacon can feed extremely accurate position information with respect to the own position. The present invention has an advantage that the position of the own vehicle is corrected based on such light beacon information and hence, it is possible to detect the position of the own vehicle with high accuracy.

The light beacon information includes the own vehicle lane information which contains the traveling lane on which the own vehicle travels, and the position coordinates information which contains the position coordinates of the light beacon. Particularly, based on the own vehicle lane information, the lane on which the own vehicle is traveling is identified. When the lane is identified, it is possible to clarify the relative position of the own car with other vehicle which travels in parallel to the own vehicle or other oncoming vehicle.

The central processing unit, after the light beacon communication means receives the position coordinates information of the light beacon information, calculates the position of the own vehicle based on the light beacon information received by the light beacon communication means within the predetermined condition and, at the same time, stores the position of the own vehicle in the memory means or displays the calculated position of the own vehicle on the display part.

Although the GPS receiving part is mounted on the own vehicle, upon reception of the light beacon information, the central processing unit assigns priority to the light beacon information. The traveling of the own vehicle is maintained without changing over the light beacon information to the GPS information within the predetermined condition such as a fixed time or a fixed distance. Accordingly, it is possible to detect the position of the own vehicle with the accuracy higher than the accuracy of the position detection based on the GPS information.

It is possible to detect the position of the own vehicle with high accuracy without a GPS error within the predetermined condition, while it is possible to detect the position of the own vehicle with the position error smaller than the position error generated due to the self-contained navigation outside the predetermined condition.

The central processing unit includes the communication means for communicating with other vehicles and being designed for transmitting the estimated position of the own vehicle to the surrounding intermittently and hence, it is possible to exchange the accurate own vehicle position coordinates with no GPS error between the vehicles. Even when neither one of both vehicles possesses the map information, both vehicles can possess the intersection information in common, that is, it is possible to sample the target vehicle.

The central processing unit includes the vehicle approaching prediction means which performs the prediction of approaching of the own vehicle and other vehicle based on the position of the own vehicle which is determined based on the position coordinates information of the light beacon information and the position of other vehicle which is received by the communication means and is determined based on the position coordinates information of the light beacon information. Accordingly, it is possible to perform the prediction of approaching of the own vehicle and other vehicle with high accuracy and hence, by informing an occupant of the approaching of the own vehicle and other vehicle using an alarm or the like, it is possible to avoid the approaching of the own vehicle and other vehicle.

    Fig. 1
    A block diagram of a vehicle position detection system according to the present invention which is mounted on a four-wheeled vehicle A.
    Fig. 2
    A perspective view showing an example in which the vehicle position detection system is mounted on the four-wheeled vehicle A.
    Fig. 3
    A block diagram of a vehicle position detection system according to the present invention which is mounted on a two-wheeled vehicle B.
    Fig. 4
    A perspective view showing an example in which the vehicle position detection system is mounted on the two-wheeled vehicle B.
    Fig. 5
    A block diagram showing the constitution of main parts having a position measuring function in a GPS receiving part, a light beacon communication means, an inertia navigation system, and a navigation (NAVI) system of the four-wheeled vehicle A.
    Fig. 6
    A block diagram showing the constitution of main parts of a GPS receiving part, a light beacon communication means and an inertia navigation system mounted on the two-wheeled vehicle B.
    Fig. 7
    A view showing positions of vehicles on a road.
    Fig. 8
    A flowchart showing the manner of operation of the vehicle position detection system on the vehicle before receiving light beacon information.
    Fig. 9
    A flowchart showing the manner of operation when the light beacon information is received.
    Fig. 10
    A flowchart showing the manner of operation when signals are received from other vehicle.
    Fig. 11
    A graph showing a change with time of an error quantity between an actual position and an estimated position when time, distance or the like passes.
    Fig. 12
    A flowchart showing the processing of a vehicle approaching prediction means.

Hereinafter, preferred embodiment of the present invention is explained in conjunction with attached drawings.

Fig. 1 is a block diagram of a vehicle position detection system according to the present invention which is mounted on a four-wheeled vehicle A. The vehicle position detection system 10 is a system for detecting a position of an own vehicle, and includes a GPS (Global positioning system) receiving part 12 having an antenna 11, a light beacon communication means 14 having a light receiving part 13 for receiving a light beacon, an inertia navigation system (INS) 15 which has a gyro sensor 16 for detecting an azimuth of the own vehicle and a vehicle speed sensor 17 and controls the advancing direction and a moving speed of the own vehicle, a navigation (NAVI) system 18 having a map, and a central processing unit 19 which acquires information from the navigation (NAVI) system 18 and the light beacon communication means 14 and processes the information.

Further, the vehicle position detection system 10 includes a communication means 21 having an antenna 20 for communication with other vehicle, and a vehicle information interface (I/F) 22. Further, the vehicle position detection system 10 includes an HUD (Head Up Display) 23, a display part 24 and a sound information reproduction means 25. Still further, the central processing unit 19 includes a memory means 26 and a vehicle approaching prediction means 27.

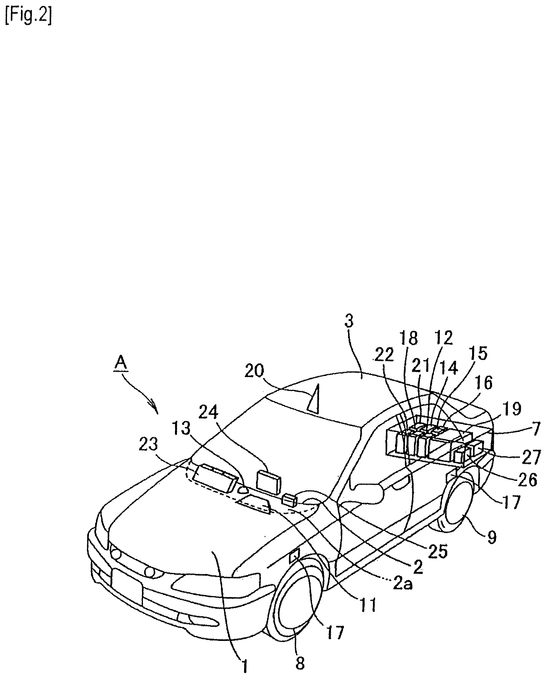

Fig. 2 is a perspective view showing an example in which the vehicle position detection system is mounted on the four-wheeled vehicle A. On an upper surface 2a of a dashboard (numeral 1 indicating a hood) of the four-wheeled vehicle A, the antenna 11 which receives the GPS signals is mounted, on an instrument panel 2, the HUD 23, the display part 24 and the sound information reproduction means 25 are mounted. Further, on an upper portion of a roof 3, a light receiving part 13 which receives optical signals such as near infrared beams which contain light beacon information, and the antenna 20 for communication with other vehicle are mounted.

Further, on a rear portion of the four-wheeled vehicle A, the GPS receiving part 12, the light beacon communication means 14, the inertia navigation system (INS) 15, the gyro sensor 16, the navigation (NAVI) system 18, the central processing unit 19, the communication means 21 for communication with other vehicle, and the vehicle information interface (I/F) 22 are mounted in a state that these parts are housed in a box 7. Further, the central processing unit 19 includes the memory means 26 and the vehicle approaching prediction means 27. Still further, a vehicle speed sensor 17 is mounted on the four-wheeled vehicle A in the vicinity of wheels 8, 9.

Hereinafter, returning to Fig. 1, functions of the respective blocks of the vehicle position detection system 10 are explained.

The GPS receiving part 12 is a device for receiving GPS signals from a GPS satellite which is constituted of a plurality of artificial satellites. The GPS receiving part 12 may adopt a usual GPS, a D-GPS (Differential GPS) or the like.

The light beacon communication means 14 is a device which receives the light beacon information containing near infrared beams or the like from a light beacon arranged in front of an intersection of a trunk road by way of the light receiving part 13. The light beacon communication means 14 may function not only as the means for receiving the light beacon information but also as a means for transmitting information to the light beacon. The light beacon information received by the light beacon communication means 14 includes own vehicle lane information which contains a traveling lane on which the own vehicle travels and position coordinates information containing position coordinates of the light beacon.

The gyro sensor 16 is a device for detecting a yaw rate of the own vehicle. The vehicle speed sensor 17 is a device for detecting a vehicle speed of the own vehicle based on rotational pulses of the wheel of the own vehicle. The inertia navigation system (INS) 15 is a device which performs the estimation calculation of the present position of the own vehicle based on a yaw rate value from the gyro sensor 16 and a vehicle speed value from the vehicle speed sensor 17. The navigation (NAVI) system 18 is a device for mapping the measured present position on an electronic map.

The communication means 21 for communication with other vehicle is a device which performs the direct communication (inter-vehicle communication) between vehicles by way of the antenna 20. This device transmits the position of the own vehicle and a kind of the own vehicle at fixed intervals even when there is no other vehicle or no wireless communication facility on a road side in the vicinity of the device. Here, as the communication means, a device which makes use of a relay on a road side (road-vehicle communication or vehicle road-vehicle communication) may be used.

The HUD (Head Up Display) 23 is a device which displays information on a counterpart vehicle within a peripheral field of vision. The display part 24 is a device which displays navigation information, various kinds of manipulation screens, vehicle information and the like. The sound information reproduction means 25 is a device which generates sound messages and alarm sounds.

The central processing unit 19 is a device which mainly performs a control of the whole device and, at the same time, is mounted on the own vehicle and has a function of correcting the position of the own vehicle based on the information of the light beacon when the central processing unit 19 receives the light beacon information using the light beacon communication means 14. Further, the central processing unit 13, after the light beacon communication means 14 receives the position coordinates information of the light beacon information, within a predetermined condition, calculates the own vehicle position based on the light beacon information received by the light beacon communication means 14 and, at the same time, displays the calculated position of the own vehicle on the display part 24 or stores the position of the own vehicle in the memory means 26.

Further, the central processing unit 19, after the light beacon communication means receives the position coordinates information of the light beacon information, assigns priority to the position of the own vehicle based on a self-contained navigation using coordinates of the position coordinates information as a base point within the predetermined condition, and assigns priority to the position of the own vehicle calculated based on GPS signals received by the GPS receiving part 12 outside the predetermined condition.

Still further, the central processing unit 19 includes a communication means 21 which exchanges the position coordinates information of the light beacon information with other vehicle. Further, the central processing unit 19 includes a vehicle approaching prediction means 27 which performs the prediction of the approaching of the own vehicle and other vehicle based on the position of the own vehicle which is determined based on the position coordinates information of the light beacon information and the position of other vehicle which is received by the communication means 21 and is determined based on the position coordinates information of the light beacon information.

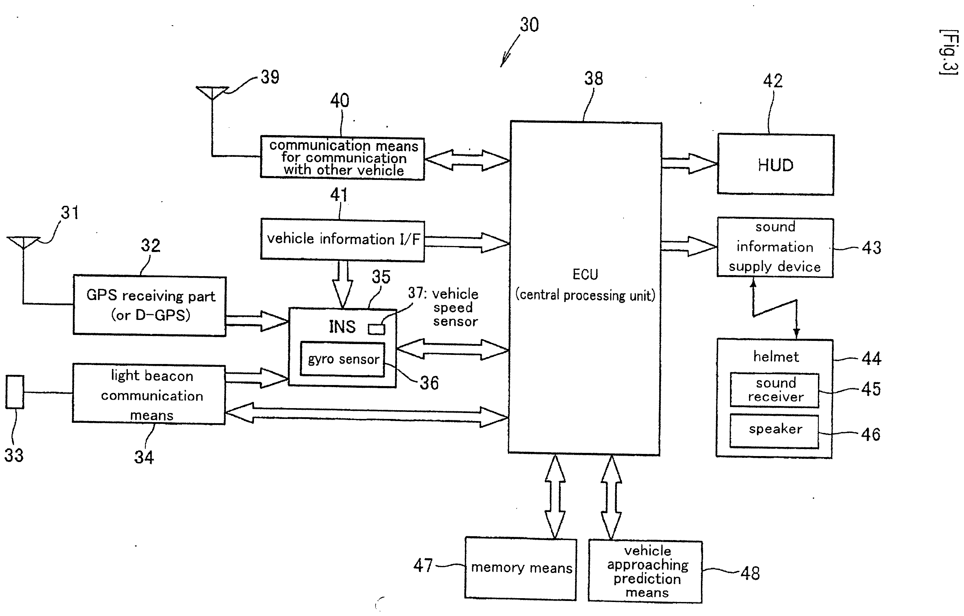

Fig. 3 is a block diagram of the vehicle position detection system according to the present invention mounted on the two-wheeled vehicle B. The vehicle position detection system 30 includes a GPS receiving part 32 having an antenna 31, a light beacon communication means 34 having a light receiving part 33, an inertia navigation system (INS) 35, a gyro sensor 36, and a vehicle speed sensor 37. Further, the vehicle position detection system 30 includes a central processing unit 38, a communication means 40 having an antenna 39 for communication with other vehicle, and a vehicle information interface (I/F) 41.

Further, the vehicle position detection system 30 includes an HUD (Head Up Display) 42 and a sound information supply device 43. Further, a helmet 44 of a rider who rides on the two-wheeled vehicle includes a sound receiver 45 and a speaker 46. The sound information supply device 43 and the sound receiver 45 are connected with each other via a wireless communication means such as a Bluetooth communication means, for example. Further, the central processing unit 38 includes a memory means 47 and a vehicle approaching prediction means 48.

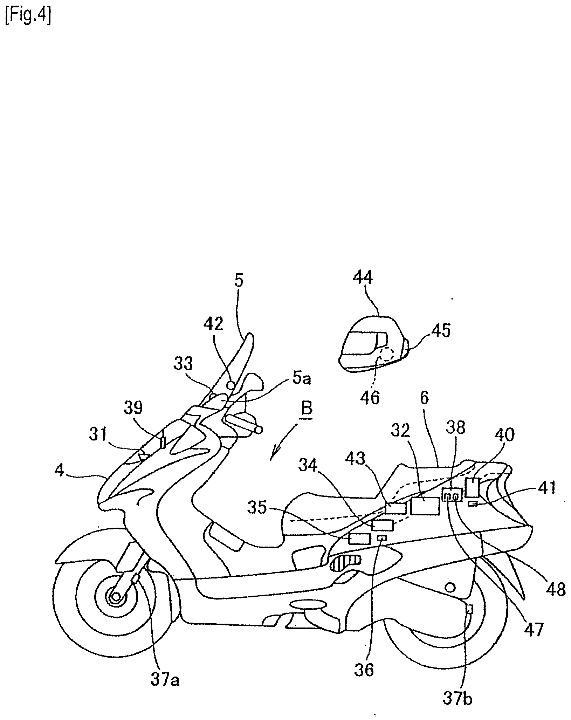

Fig. 4 is a perspective view showing an example in which the vehicle position detection system is mounted on the two-wheeled vehicle B. On a front cover 4 of the two-wheeled vehicle, the antenna 31 which receives the GPS signals and the antenna 39 for communication with other vehicle are mounted. On a meter bezel 5a (a screen 5 being arranged in front of the meter bezel 5a), the light receiving part 33 which receives optical signals such as near infrared beams containing the light beacon information and the HUD 42 are mounted.

Further, on a lower portion of a seat 6, the GPS receiving part 32, the light beacon communication means 34, the inertia navigation system (INS) 35, the gyro sensor 36, the central processing unit 38, the communication means 40 for communication with other vehicle, the vehicle information interface (I/F) 41, and the sound information supply device 43 are mounted. The central processing unit 38 includes the memory means 47 and the vehicle approaching prediction means 48. The sound receiver 45 and the speaker 46 are mounted on the helmet 44. Further, vehicle speed sensors 37a, 37b are mounted in the vicinity of front and rear wheels. The system of this embodiment uses at least one of the vehicle speed sensors 37a, 37b.

Hereinafter, returning to Fig. 3, functions of the respective blocks of the vehicle position detection system are explained.

The GPS receiving part 32 is a device for receiving GPS signals from a GPS satellite which is constituted of a plurality of artificial satellites. The GPS receiving part 32 may adopt a usual GPS, a D-GPS (Differential GPS) or the like.

The light beacon communication means 34 is a device which receives the light beacon information containing near infrared beams or the like from a light beacon arranged in front of an intersection of a trunk road by way of the light receiving part 33. The light beacon communication means 34 may function not only as the means for receiving the light beacon information but also as a means for transmitting information to the light beacon. The light beacon information received by the light beacon communication means 34 includes own vehicle lane information which contains a traveling lane on which the own vehicle travels and position coordinates information containing position coordinates of the light beacon.

The gyro sensor 36 is a device for detecting a yaw rate of the own vehicle. The vehicle speed sensor 37 is a device for detecting a vehicle speed of the own vehicle based on rotational pulses of the wheel. The inertia navigation system (INS) 35 is a device which performs the estimation calculation of the present position of the own vehicle based on a yaw rate value from the gyro sensor 36 and a vehicle speed value from the vehicle speed sensor 37.

The communication means 40 for communication with other vehicle is a device which performs the direct communication (inter-vehicle communication) between vehicles. This device transmits the position of the own vehicle and a kind of the own vehicle at fixed intervals even when there is no other vehicle or no wireless communication facility on a road side in the vicinity of the device. Here, as the communication means, a device which makes use of a relay on a road side (road-vehicle communication or vehicle road-vehicle communication) may be used. An HUD (Head Up Display) 42 is a device which displays information on a counterpart vehicle within a peripheral field of vision.

The sound information supply device 43 is a device for transmitting sound information such as a sound message or an alarm sound to the sound receiver 45 mounted on the helmet 44 via a wireless communication means such as a Bluetooth or the like, for example. The sound receiver 45 mounted on the helmet 44 receives sound information such as a sound message or an alarm sound transmitted from the sound information supply device 43 and allows the speaker 46 to generate the sound message or the alarm sound.

The central processing unit 38 is a device which mainly performs a control of the whole device and, at the same time, is mounted on the own vehicle. The central processing unit 38 has a function of correcting the position of the own vehicle based on the information of the light beacon when the central processing unit 38 receives the light beacon information using the light beacon communication means 34. Further, the central processing unit 38, after the light beacon communication means 34 receives the position coordinates information of the light beacon information, within a predetermined condition, calculates the own vehicle position based on the light beacon information received by the light beacon communication means 34 and, at the same time, displays the calculated position of the own vehicle on the display part or stores the position of the own vehicle in the memory means 47.

Further, the central processing unit 38, after the light beacon communication means 34 receives the position coordinates information of the light beacon information, assigns priority to the position of the own vehicle based on a self-contained navigation which uses coordinates of the position coordinates information as a base point within the predetermined condition, and assigns priority to the position of the own vehicle calculated based on GPS signals received by the GPS receiving part 32 outside the predetermined condition.

Still further, the central processing unit 38 includes a communication means 40 which exchanges the position coordinates information of the light beacon information of the own vehicle with the position coordinates information of the light beacon information of other vehicle. Further, the central processing unit 38 includes a vehicle approaching prediction means 48 which performs the prediction of the approaching of the own vehicle and other vehicle based on the position of the own vehicle which is determined based on the position coordinates information of the light beacon information and the position of other vehicle which is received by the communication means 40 and is determined based on the position coordinates information of the light beacon information.

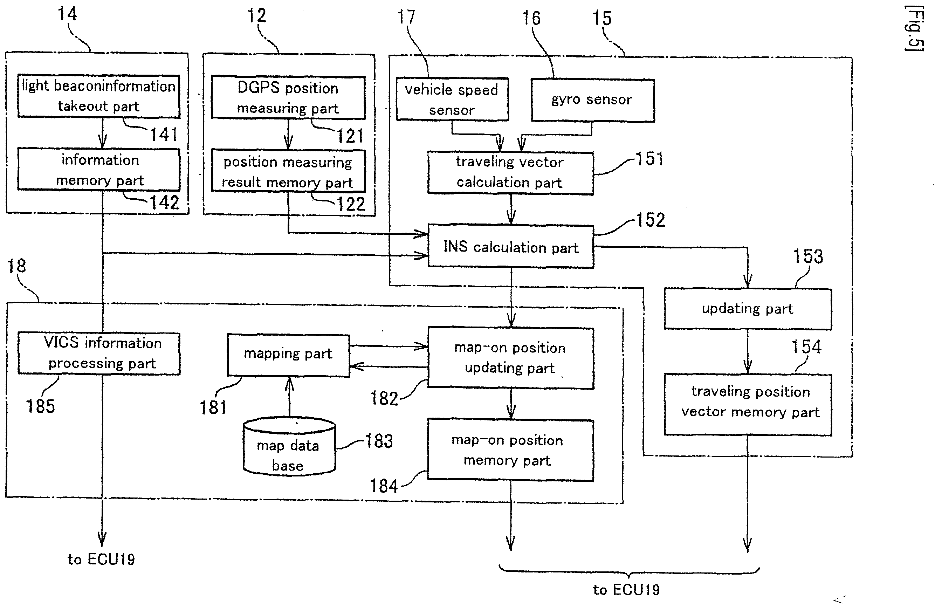

Fig. 5 is a block diagram showing the constitution of main parts having a position measuring function in the GPS receiving part 12, the light beacon communication means 14, the inertia navigation system (INS) 15 and the navigation (NAVI) system 18 of the four-wheeled vehicle A, wherein symbols equal to the symbols shown in Fig. 1 indicate identical or substantially identical parts.

In the GPS receiving part 12, a GPS position measuring part 121 periodically measures the present position based on times at which a plurality of GPS radio waves are received. The result of the latest position measurement is stored in the position measuring result memory part 122.

In the light beacon communication means 14, a light beacon information acquiring part 141 acquires position information of the light beacon, the own vehicle lane information and the intersection information from the received light beacon signals. In an information memory part 142, position coordinates information of the light beacon, the own vehicle lane information and the intersection information are stored.

A traveling vector calculation part 151 of the inertia navigation system (INS) 15 calculates a traveling vector (vehicle speed and advancing direction) of the own vehicle based on a vehicle speed which is detected by the vehicle speed sensor 17 and an azimuth detected by the gyro sensor 16. An INS calculation part 152 periodically calculates the present position of the own vehicle based on the result of position measurement and the traveling vector as a traveling vector which is registered using the present position as a starting point (hereinafter, expressed as traveling position vector) . The result of calculation is updated and registered in a traveling position vector memory part 154 by an updating part 153.

In the NAVI system 18, a mapping part 181 performs mapping of the present position on an electronic map based on the present position of the own vehicle informed by a map-on position updating part 182 and electronic map information which is preliminarily stored on the map database (DB) 183, and the present position mapped on the electronic map is informed to the map-on position updating part 182. The map-on position updating part 182 registers the informed map-on position of the own vehicle in a map-on position memory part 184. The map-on position and the traveling position vector are fed to the central processing unit 19. Further, the NAVI system 18 receives the VICS (Vehicle Information and Communication System) information from the light beacon communication means 14, processes the VICS information using a VICS information processing part 185 and feeds the VICS information to the center processing unit 19.

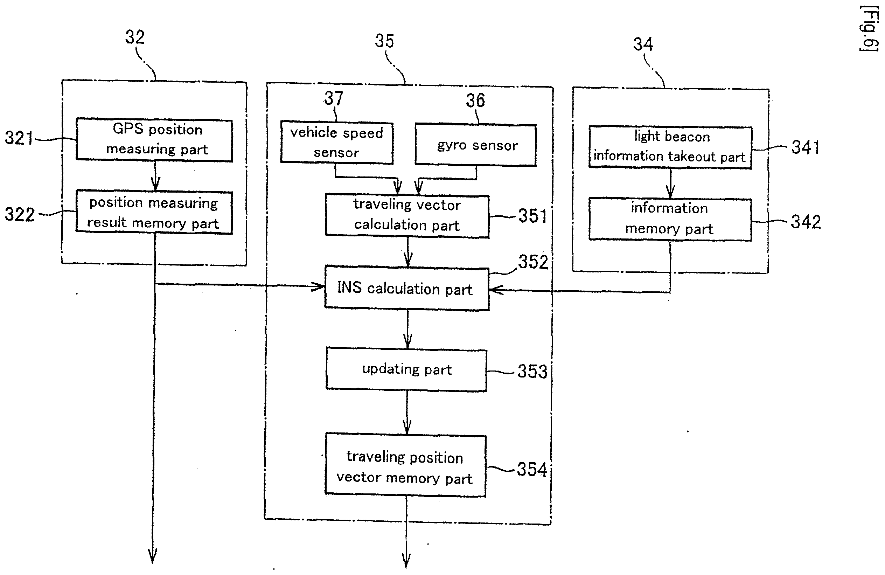

Fig. 6 is a block diagram showing the constitution of main parts of a GPS receiving part 32, a light beacon communication means 34 and an inertia navigation system (INS) 35 mounted on the two-wheeled vehicle B, wherein symbols equal to the symbols shown in Fig. 3 indicate identical or substantially identical parts.

A GPS position measuring part 321 periodically measures the present position based on times at which a plurality of GPS radio waves are received. The result of the latest position measurement is stored in a position measuring result memory part 322.

In the light beacon communication means 34, a light beacon information acquiring part 341 acquires position information of the light beacon, own vehicle lane information and intersection information from the received light beacon signals. In an information memory part 342, position coordinates information of the light beacon, the own vehicle lane information and the intersection information are stored.

A traveling vector calculation part 351 calculates the traveling vector of the own vehicle based on a vehicle speed which is detected by the vehicle speed sensor 37 and an azimuth detected by the gyro sensor 36. An INS calculation part 352 periodically calculates a traveling vector of the own vehicle based on the result of position measurement and the traveling vector. The result of calculation is updated and registered in a traveling position vector memory part 354 by an updating part 353.

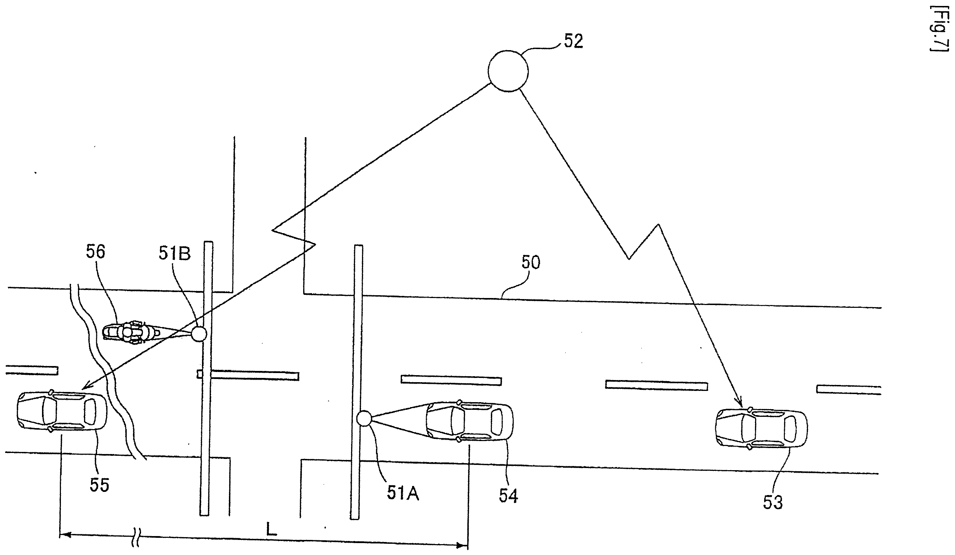

Next, steps and processing in respective devices in using the vehicle position detection system according to this embodiment are explained in detail in conjunction with Fig. 7 to Fig. 12. Fig. 7 is a view showing positions of a vehicle on a road. In Fig. 7, numeral 50 indicates a road, symbols 51A, 51B indicate light beacons, numeral 52 indicates a GPS satellite, numeral 53 indicates the vehicle before receiving the light beacon, numeral 54 indicates the vehicle after receiving the light beacon, and numeral 55 indicates the vehicle after receiving the light beacon outside the predetermined condition. Further, numeral 56 indicates other vehicle (two-wheeled vehicle).

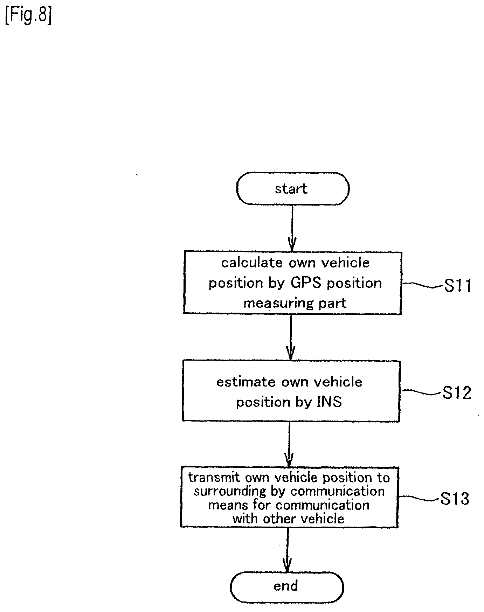

First of all, as shown in Fig. 7, the manner of operation of the vehicle position detection system with respect to the vehicle 53 before receiving the light beacon is explained in conjunction with a flowchart shown in Fig. 8.

Step S11: The GPS position measuring part 121 calculates the position of the own vehicle based on the GPS satellite signals.

Step S12: The inertia navigation system (INS) 15 estimates the position of the own vehicle based on the GPS position measuring result and signals from the gyro sensor 16, the speed sensor 17 at intervals (for example, for every 100m seconds) shorter than intervals (1 second) of the GPS satellite signals.

Step S13: The communication means 21 for communication with other vehicle transmits the estimated position of the own vehicle to the surrounding intermittently (for example, for every 100m seconds).

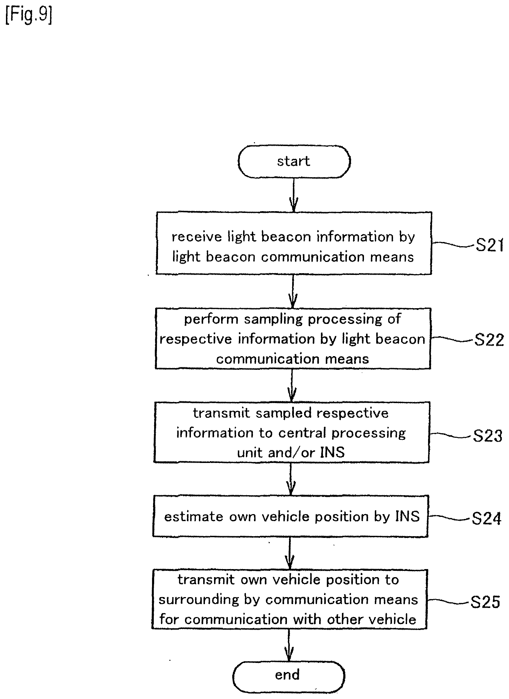

Next, the manner of operation of the vehicle when the vehicle receives signals from the light beacon 51 on the own vehicle lane as in the case of the vehicle 54 shown in Fig. 7 is explained in conjunction with a flowchart shown in Fig. 9.

Step S21: The light beacon communication means 14 of the vehicle receives the light beacon information from the light beacon 51A on the road.

Step S22: The light beacon communication means 14 samples and processes the measured position coordinates of a point where the beacon is received, the own vehicle lane information (lane number), the coordinates of an intersection located in front of the own vehicle in the advancing direction of the own vehicle (node data), information on roads which are connected with the intersection (link data) and the like from the data transmitted from the light beacon 51A.

Step S23: The respective sampled information is transmitted to the central processing unit 19 and/or the INS 15.

Here, the light beacon communication means 14 may be configured to only transmit a data row obtained by decoding the signals from the light beacon 51A to the central processing unit 19 and/or the INS 15 as it is. In such a case, the data sampling processing is performed by the central processing unit 19 and/or the INS 15.

Here, a transmission/reception range of the light beacon is generally set within a rectangular range having one side of approximately 3. 5m. On the other hand, with respect to lane widths stipulated by road standards (based on the Road Structure Ordinance), a lane width of a trunk road along which a large number of light beacons are installed is set to approximately 3.5m, and a lane width of a small-sized road is set to approximately 3.25m. Accordingly, there is little possibility that the vehicle erroneously receives position coordinates of a neighboring lane.

Here, when the vehicle receives two light beacon signals simultaneously, the central processing unit 19 determines that the own vehicle travels on or in the vicinity of a zoning line of lanes and processes the case such that the own vehicle passes through an intermediate point between the respective measured coordinates of the two neighboring lanes.

Step S24: The INS 15 estimates the position of the own vehicle based on the measured coordinates (in place of the GPS position measuring result) and signals from the gyro sensor 16, the speed sensor 17 at predetermined intervals (for example, for every 100m seconds).

Step S25: The communication means 21 for communication with other vehicle transmits the estimated position of the own vehicle to the surrounding intermittently (for example, for every 100m seconds).

By transmitting the own vehicle lane information together with the position of the own vehicle simultaneously, it is possible to facilitate the sampling of the target vehicle by other vehicle which receives the own vehicle information.

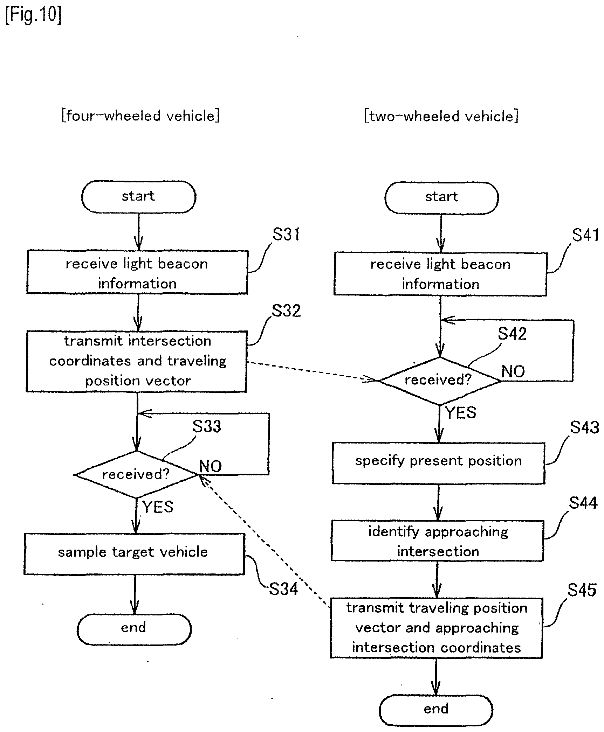

Next, as shown in Fig. 7, the manner of operation of the own vehicle when the own vehicle receives an other-vehicle signal from other vehicle (a two-wheeled vehicle) 56 using the communication means 21 for communication with other vehicle is explained in conjunction with a flowchart shown in Fig. 10.

Step S31: In the vehicle 54, the light beacon communication means 14 receives the light beacon information from the light beacon 51A.

Step S32: The communication means 21 for communication with other vehicle transmits an intersection position and a traveling position vector.

Step S41: In the two-wheeled vehicle 56, the light beacon communication means 34 receives the light beacon information from the light beacon 51B.

Step S42: It is determined whether the communication means 40 for communication with other vehicle receives the other-vehicle signal or not. When it is determined that the communication means 40 for communication with other vehicle does not receive the other-vehicle signal, the communication means 40 for communication with other vehicle waits for the other-vehicle signal. When it is determined that the communication means 40 for communication with other vehicle receives the other-vehicle signal, the processing advances to next step S43.

Step S43: A present position of the own vehicle is accurately specified based on position measurement result using the light beacon information, and a traveling position vector of the present position is obtained.

Step S44: The intersection to which the own vehicle approaches is identified based on the traveling position vector of the own vehicle and the coordinates of the respective intersections.

Step S45: The traveling position vector of the own vehicle and the coordinates of the intersection to which the own vehicle approaches are transmitted together with the ID of the own vehicle, the estimated position, the own vehicle state and the like.

Step S33: It is determined whether the four-wheeled vehicle 54 receives the signal transmitted from the two-wheeled vehicle 56 or not. If the four-wheeled vehicle 54 does not receive the signal, the four-wheeled vehicle 54 waits for the reception of the signal. If the four-wheeled vehicle 54 receives the signal, the processing advances to next step S34.

Step S34: All vehicles having the possibility of intersecting the own vehicle are sampled as target vehicles based on the traveling position vector of own vehicle registered in the traveling position vector memory part 154 and the traveling position vectors notified from the respective vehicles.

In the above-mentioned explanation, the technical feature lies in that the navigation is changed over to the self-contained navigation using the measured coordinates obtained based on the GPS position measurement as the base point immediately after receiving the light beacon.

Next, the explanation is made with respect to a case in which a sufficient time or traveling distance passes after receiving information from a light beacon 51A as in the case of the vehicle position indicated by symbol 55 in Fig. 7.

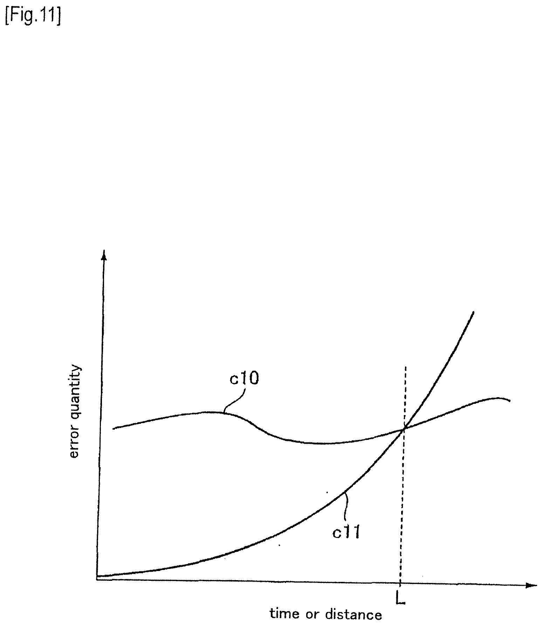

Fig. 11 is a graph showing a change with time of an error quantity between an actual position and an estimated position when time, distance or the like passes. A curve C10 indicates an error between the actual position and the estimated position attributed to the GPS, and a curve C11 indicates a change with time of an error between the actual position and the estimated position attributed to the self-contained navigation after the light beacon is received.

An origin indicates a point of time at which the light beacon is received. As can be understood from Fig. 11, for some time immediately after receiving the light beacon, it is possible to expect the higher coordinates accuracy by performing the self-contained navigation using the measured coordinates as the base point than by relying on the result of the GPS position measurement. However, the self-contained navigation increases an accumulated error through the sufficient time, the sufficient traveling distance or the right or left turning (change of advancing direction) and the accumulated error exceeds the GPS position measurement error. In Fig. 11, this timing is indicated by L. Accordingly, when the fixed time or the distance passes upon receiving the light beacon, it is necessary to return the own vehicle position to the GPS position measurement (self-contained navigation based on the GPS position measurement).

As a technique for determining the timing L, following four techniques are considered.

A technique 1 (distance-system) is a technique which returns the own vehicle position to the GPS position measurement by using the fixed distance traveling from the measured coordinates which become the base point obtained from the light beacon information as a trigger. A value of the fixed distance may be set to 1000m, for example.

A technique 2 (time-system) is a technique which returns the own vehicle position to the GPS position measurement when a fixed time passes from a point of time that the measured coordinates which become the base point obtained from the light beacon information is received. A value of the fixed time may be set to 10 minutes, for example.

A technique 3 (left-and-right-cumulative-system) is a technique which returns the own vehicle position to the GPS position measurement when an advancing direction changing angle in the lateral direction and a cumulative value of number of times of advancing direction changing from the measured coordinates which become the base point obtained from the light beacon information exceed predetermined values.

A technique 4 (distance/time/left-and-right-turning composite system) is a technique which uses the above-mentioned techniques 1 to 3 in combination. The technique may use an inclusive OR or a conditional expression.

As an example of the conditional expression, a following formula (1) may be considered.

$$\Delta E \ \leq\ \Delta L \ +\ \Delta T \ +\ N\cdot A \quad (1)$$

Here, $\Delta E$: threshold value, $\Delta L$: index of distance from base point, $\Delta T$: index of lapsed time from received time, $N$: index of number of change of advancing direction (for example, when the change of advancing direction at a predetermined angular velocity continues for 2 or more seconds, one time is counted), $A$: advancing direction changing angle (for example, a cumulative value of absolute values of transition angles per respective one times)

By returning the own vehicle position to the GPS position measurement using the above-mentioned four techniques, it is possible to determine the position using the position measuring method with a small error quantity.

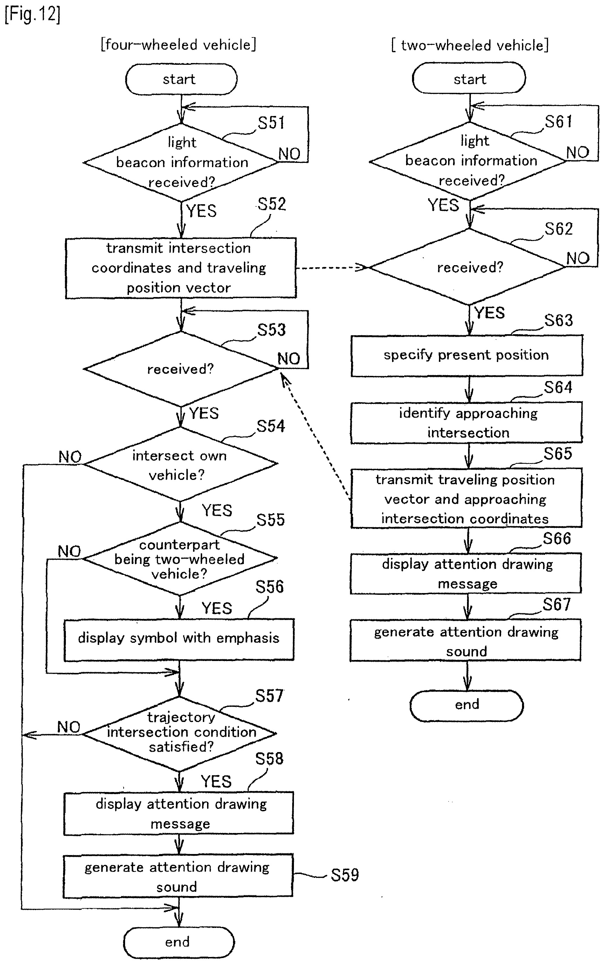

Next, the manner of operation of the vehicle approaching prediction means is explained using a flowchart shown in Fig. 12.

Step S51: The four-wheeled vehicle 54 receives the light beacon information.

StepS52: The coordinates of all recognized intersections and the traveling position vector of the own vehicle are transmitted to all vehicles with which the communication link is satisfied as data together with the ID of the own vehicle, the estimation position, the arrival time at the intersections, the number of received sets, the own vehicle state (brake, turn signals and the like). In the ID, the identification information intrinsic to the own vehicle is preliminarily registered together with a kind of the own vehicle (such as the distinction between the two-wheeled vehicle and the four-wheeled vehicle).

Step S61: The two-wheeled vehicle 56 receives the light beacon information from the light beacon 51B.

Step S62: It is determined whether the two-wheeled vehicle 56 receives the data transmitted from the four-wheeled vehicle 54 or not. If the two-wheeled vehicle 56 does not receive the data transmitted from the four-wheeled vehicle 54, the two-wheeled vehicle 56 waits for the reception of the data. If the two-wheeled vehicle 56 receives the data transmitted from the four-wheeled vehicle 54, the processing advances to next step S63.

Step S63: The present position of own vehicle is accurately specified based on the poison measurement result using the light beacon information, and the traveling position vector of the present position is obtained.

Step S64: The intersection to which the own vehicle approaches is identified based on the traveling position vector of the own vehicle and the coordinates of the respective intersections.

Step S65: The traveling position vector of the own vehicle and the coordinates of the intersection to which the own vehicle approaches are transmitted together with the ID of the own vehicle, the estimated position, the own vehicle state and the like.

Step S53: It is determined whether the four-wheeled vehicle 54 receives the signal transmitted from the two-wheeled vehicle 56 or not. If the four-wheeled vehicle 54 does not receive the signal, the four-wheeled vehicle 54 waits for the reception of the signal. If the four-wheeled vehicle 54 receives the signal, the processing advances to next step S54.

Step S54: All vehicles having the possibility of intersecting the own vehicle are sampled as target vehicles based on the traveling position vector of own vehicle registered in the traveling position vector memory part 154 and the traveling position vectors notified from the respective vehicles.

Step S55: It is determined whether the target vehicle is a two-wheeled vehicle or not based on the ID.

Step S56: If the target vehicle is the two-wheeled vehicle, a symbol indicative of the present position of the vehicle is displayed on the NAVI display part 16 in an emphasized manner together with a symbol of the own vehicle and symbols of other target vehicles.

Step S57: With respect to all sampled target vehicles, it is determined whether a trajectory intersecting condition is satisfied or not based on times at which the own vehicle and the respective other vehicles arrive at the intersection. For example, assuming the time at which the own vehicle (four-wheeled vehicle 54) arrives at the intersection as t2 and the time at which the target vehicle (two-wheeled vehicle 56) arrives at the intersection as t3, it is determined that the trajectory intersecting condition is satisfied provided that a following formula (2) is satisfied.

$$\left|t2-t3\right|\leq t_{REF} \quad (2)$$

Here, $t_{REF}$ indicates a predetermined reference time difference.

Step S58: When there exists the vehicle which satisfies the trajectory intersecting condition, a symbol for drawing an attention is displayed on the HUD.

Step S59: An alarming sound or a sound message is outputted also from a speaker.

Step S66: The two-wheeled vehicle 56, after transmitting the traveling position vector of the own vehicle, displays a symbol for drawing an attention on the HUD.

Step S67: A sound message, an alarming sound or the like for drawing an attention is outputted to a helmet of a driver from a sound transmitter.

According to this embodiment, the vehicle on which the NAVI system is not mounted can also recognize the position of the intersections and the positions of other vehicles based on the information provided from the light beacon.

Here, with respect to the measured coordinates for the respective lanes out of the data transmitted form the light beacon, the correction value updated data of the D-GPS may be transmitted in place of the measured coordinates. In this case, each vehicle adopts the D-GPS system.

Here, without providing the direct information exchange communication between the vehicles, the present invention may make use of the two-way communication function of transmission and reception which the light beacon possesses.

In this case, an outflow/inflow vehicle identification system is provided on an intersection side, and a light beacon and a broadcasting wireless communication means are connected to the system, wherein when each vehicle passes below the light beacon, the own vehicle information is notified to the outflow/inflow vehicle identification system, and the outflow/inflow vehicle identification system collectively notifies the notified outflow/inflow vehicles to vehicles in the vicinity of the intersection using the broadcasting wireless notification means.

The present invention is used as a vehicle position detection system which detects the position of the vehicle.

10: vehicle position detection system
11: antenna
12: GPS receiving part
13: light receiving part
14: light beacon communication means
15: inertia navigation system (INS)
16: gyro sensor
17: vehicle speed sensor
18: navigation (NAVI) system
19: central processing unit
20: antenna
21: communication means for communication with other vehicle
22: vehicle information interface (I/F)
23: HUD
24: display part
25: sound information reproduction means
26: memory means
27: vehicle approaching prediction means

**Claims**

1. A vehicle position detection system (10) capable of detecting a position of an own vehicle, comprising:

a GPS receiving part (12) mounted on the own vehicle that receives GPS signals from a GPS satellite and comprising a GPS position measuring part (121) for calculating the position of the own vehicle based on the GPS satellite signals, an inertia navigation system (15) for estimating the present position of the own vehicle based on a yaw rate value and a vehicle speed value, a light beacon communication means (14) mounted on the own vehicle and designed for receiving light beacon information from a light beacon arranged in front of an intersection, and a central processing unit (19) mounted on the own vehicle for correcting a position of the own vehicle based on the light beacon information upon reception of the light beacon information from the light beacon communication means (14), wherein the central processing unit (19) is designed for calculating the position of the own vehicle based on a self-contained navigation, using position measured coordinates of the light beacon included in the received light beacon information which become base point, within a predetermined condition, and for calculating the position of the own vehicle based on GPS signals received by the GPS receiving part (12) outside the predetermined condition, **characterised in that** the predetermined condition is defined by a combination of:

a fixed time ($\Delta$T) from a received time of the base point measured coordinates included in the light beacon information; a fixed distance ($\Delta$L) from the position measured coordinates of the base point; and the set of change of advancing direction (N) and advancing direction changing angle (A); wherein the number of change of advancing direction (N) relates to change of advancing direction at a predetermined angular velocity for two or more seconds, wherein the advancing direction changing angle (A) relates to a cumulative value of absolute values of transition angles per respective one times, and wherein an origin of the number of change of advancing direction (N) and the advancing direction changing angle (A) is measured coordinates which become a base point obtained from the light beacon information.

2. A vehicle position detection system (10) according to claim 1, wherein the light beacon information further comprises vehicle lane information comprising a traveling lane on which the own vehicle travels.

3. A vehicle position detection system (10) according to claim 1 or 2, wherein the central processing unit (19), after the light beacon communication means (14) receives the position coordinates information of the light beacon information, calculates the position of the own vehicle based on the light beacon information received by the light beacon communication means (14) within the predetermined condition and, at the same time, stores the position of the own vehicle in a memory means (26) or displays the calculated position of the own vehicle on a display part (24).

4. A vehicle position detection system (10) according to any of the preceding claims, wherein the position coordinates information received by the light beacon information present a base point within the predetermined condition.

5. A vehicle position detection system (10) according to any of the preceding claims, the light beacon information containing near infrared beams.

6. A vehicle position detection system (10) according to any of the preceding claims, wherein the central processing unit (19) includes a communication means (21) for communicating with other vehicles and being designed for transmitting the estimated position of the own vehicle to the surrounding intermittently.

7. A vehicle position detection system (10) according to claim 6, the communication means (21) being designed for transmitting the own vehicle lane information together with the position of the own vehicle simultaneously.

8. A vehicle position detection system (10) according to claims 6 or 7, wherein the communication means (21) transmit a travelling position vector of the own vehicle and the coordinates of the intersection to which the own vehicle approaches together with an ID of the vehicle.

9. A vehicle position detection system (10) according to any of claims 6 to 8, wherein the central processing unit (19) includes a vehicle approaching prediction means (27) which performs the prediction of approaching of the own vehicle and other vehicles based on the position of the own vehicle which is determined based on the position coordinates information of the light beacon information and a position of other vehicles which is received by the communication means (21) and is determined based on the position coordinates information of the light beacon information.

10. A vehicle position detection system (10) according to any of claims 6 to 9, wherein the vehicle approaching prediction means (27) is designed to sample all vehicles having the possibility of intersecting the own vehicle as target vehicles based on a travelling position vector of the own vehicle and the travelling position vectors notified from the respective vehicles.

**Patentansprüche**

1. Fahrzeugpositionserfassungssystem (10), das zum Erfassen einer Position eines eigenen Fahrzeugs ausgelegt ist, das aufweist:

eine GPS-Empfangskomponente (12), die an dem eigenen Fahrzeug befestigt ist, die GPS-Signale von einem GPS-Satelliten empfängt und eine GPS-Positionsmesskomponente (121) zum Berechnen der Position des eigenen Fahrzeugs basierend auf den GPS-Satellitensignalen aufweist,

ein Trägheitsnavigationssystem (15) zum Schätzen der aktuellen Position des eigenen Fahrzeugs basierend auf einem Gierratenwert und einem Fahrzeuggeschwindigkeitswert,

ein Lichtsignal-Kommunikationsmittel (14), das an dem eigenen Fahrzeug befestigt ist und dazu ausgelegt ist, Lichtsignalinformationen von einem Lichtsignal vor einer Straßenkreuzung zu erhalten, und

eine zentrale Verarbeitungseinheit (19), die an dem eigenen Fahrzeug befestigt ist, zum Korrigieren einer Position des eigenen Fahrzeugs basierend auf den Lichtsignalinformationen bei Empfang der Lichtsignalinformationen von dem Lichtsignal-Kommunikationsmittel (14),

wobei die zentrale Verarbeitungseinheit (19) zum Berechnen der Position des eigenen Fahrzeugs basierend auf einer eigenständigen Navigation ausgelegt ist, unter Verwendung der gemessenen Positionskoordinaten des Lichtsignals, die in den empfangenen Lichtsignalinformationen enthalten sind, die zum Ausgangspunkt werden, unter einer bestimmten Bedingung, und zum

Berechnen der Position des eigenen Fahrzeugs basierend auf GPS-Signalen, die von der GPS-Empfangskomponente (12) außerhalb der bestimmten Bedingung empfangen wurden, **dadurch gekennzeichnet, dass**

die bestimmte Bedingung definiert ist durch eine Kombination aus:

einem festen Zeitpunkt (ΔT) von einer Empfangszeit der gemessenen Koordinaten des Ausgangspunktes, die in den Lichtsignalinformationen enthalten sind;

einem festen Abstand (ΔL) von den gemessenen Positionskoordinaten des Ausgangspunkts;

und der Gruppe der Änderungen der Weiterfahrtrichtung (N) und dem Änderungswinkel (A) der Weiterfahrtrichtung;

wobei sich die Anzahl der Änderungen der Weiterfahrtrichtung (N) auf die Änderung der Weiterfahrtrichtung in einer bestimmten Winkelgeschwindigkeit für zwei oder mehr Sekunden bezieht,

wobei sich der Winkel (A) der Änderung der Weiterfahrtrichtung sich auf einen kumulativen Wert der Absolutwerte der Übergangswinkel für jeweils einen Zeitpunkt bezieht, und

wobei ein Ursprung der Anzahl der Änderungen der Weiterfahrtrichtung (N) und der Winkel (A) der Änderung der Weiterfahrtrichtung aus den Lichtsignalinformationen erhaltene gemessene Koordinaten sind, die zu einem Ausgangspunkt werden.

2. Fahrzeugpositionserfassungssystem (10) nach Anspruch 1, wobei die Lichtsignalinformationen weiterhin Fahrzeugspurinformation aufweisen, die eine Fahrspur aufweisen, auf der das eigene Fahrzeug fährt.

3. Fahrzeugpositionserfassungssystem (10) nach Anspruch 1 oder 2, wobei die zentrale Verarbeitungseinheit (19), nachdem das Lichtsignal-Kommunikationsmittel (14) die Positionskoordinateninformationen der Lichtsignalinformationen empfangen hat, die Position des eigenen Fahrzeugs basierend auf den von dem Lichtsignal-Kommunikationsmittel (14) empfangenen Lichtsignalinformationen im Rahmen des bestimmten Bedingung empfängt und gleichzeitig die Position des eigenen Fahrzeugs in einem Speichermittel (26) speichert oder die berechnete Position des eigenen Fahrzeugs auf einer Anzeigekomponente (24) anzeigt.

4. Fahrzeugpositionserfassungssystem (10) nach einem der vorhergehenden Ansprüche, wobei die von den Lichtsignalinformationen empfangenen Positionskoordinateninformationen einen Ausgangspunkt innerhalb der bestimmten Bedingung darstellen.

5. Fahrzeugpositionserfassungssystem (10) nach einem der vorhergehenden Ansprüche, wobei die Lichtsignalinformationen nahe Infrarotlichtstrahlen enthalten.

6. Fahrzeugpositionserfassungssystem (10) nach einem der vorhergehenden Ansprüche, wobei die zentrale Verarbeitungseinheit (19) ein Kommunikationsmittel (21) zur Kommunikation mit anderen Fahrzeugen enthält und das dazu ausgelegt ist, die geschätzte Position des eigenen Fahrzeugs intermittierend an die Umgebung zu übertragen.

7. Fahrzeugpositionserfassungssystem (10) nach Anspruch 6,

wobei das Kommunikationsmittel (21) dazu ausgebildet ist, die Fahrspurinformationen des eigenen Fahrzeugs gleichzeitig zusammen mit der Position des eigenen Fahrzeugs zu übertragen.

8. Fahrzeugpositionserfassungssystem (10) nach Anspruch 6 oder 7,

wobei das Kommunikationsmittel (21) einen Fahrtpositionsvektor des eigenen Fahrzeugs und die Koordinaten der Straßenkreuzung, der sich das eigene Fahrzeug nähert, zusammen mit einer Kennung des Fahrzeugs überträgt.

9. Fahrzeugpositionserfassungssystem (10) nach einem der Ansprüche 6 bis 8,
wobei die zentrale Verarbeitungseinheit (19) ein Prognosemittel (27) der Fahrzeugannäherung enthält, das eine Prognose der Annäherung des eigenen Fahrzeugs und anderer Fahrzeuge basierend auf der Position des eigenen Fahrzeugs, die basierend auf den Positionskoordinateninformationen der Lichtsignalinformationen bestimmt wird, und eine Position anderer Fahrzeuge, die vom Kommunikationsmittel (21) empfangen wird und basierend auf den Positionskoordinateninformationen der Lichtsignalinformationen bestimmt wird, durchführt.

10. Fahrzeugpositionserfassungssystem (10) nach einem der Ansprüche 6 bis 9,
wobei das Prognosemittel (27) der Fahrzeugannäherung dazu ausgebildet ist, alle Fahrzeuge zu erfassen, für die die Möglichkeit des Kreuzens des eigenen Fahrzeugs als Zielfahrzeuge basierend auf einem Fahrtpositionsvektor des eigenen Fahrzeugs und den von den jeweiligen Fahrzeugen gemeldeten Fahrtpositionsvektoren besteht.

**Revendications**

1. Système de détection de position de véhicule (10) capable de détecter une position d'un véhicule propre, comprenant :

une partie réceptrice GPS (12) montée sur le véhicule propre qui reçoit des signaux GPS en provenance d'un satellite GPS et comprenant une partie de mesure de position GPS (121) pour calculer la position du véhicule propre sur la base des signaux du satellite GPS,
un système de navigation à inertie (15) pour estimer la position présente du véhicule propre sur la base d'une valeur de vitesse de taux et une valeur de vitesse de véhicule,
un moyen de communication avec balise lumineuse (14) monté sur le véhicule propre et conçu pour recevoir des informations de balise lumineuse en provenance d'une balise lumineuse agencée devant une intersection, et
une unité centrale de traitement (19) montée sur le véhicule propre pour corriger une position du véhicule propre sur la base des informations de balise lumineuse en provenance du moyen de communication avec balise lumineuse (14),
dans lequel l'unité centrale de traitement (19) est conçue pour calculer la position du véhicule propre sur la base d'une navigation autonome, en utilisant des coordonnées mesurées de position de la balise lumineuse incluses dans les informations de balise lumineuse reçues qui deviennent un point de base, dans une condition prédéterminée, et pour calculer la position du véhicule propre sur la base des signaux GPS reçus par la partie réceptrice GPS (12) en dehors de la condition prédéterminée,
**caractérisé en ce que**
la condition prédéterminée est définie par une combinaison de :

une heure fixe ($\Delta$T) à partir d'une heure reçue des coordonnées mesurées du point de base incluse dans les informations de balise lumineuse ;
une distance fixe ($\Delta$L) à partir des coordonnées mesurées de position du point de base ;
et l'ensemble de changement de direction de progression (N) et l'angle de changement de direction de progression (A) ;
dans lequel le nombre de changement de direction de progression (N) concerne un changement de direction de progression à une vitesse angulaire prédéterminée pendant deux secondes ou plus,
dans lequel l'angle de changement de direction de progression (A) concerne une valeur cumulative de valeurs absolues d'angles de transition des changements respectifs, et
dans lequel une origine du nombre de changement de direction de progression (N) et de l'angle de changement de direction de progression (A) est des coordonnées mesurées qui deviennent un point de base obtenu à partir des informations de balise lumineuse.

2. Système de détection de position de véhicule (10) selon la revendication 1, dans lequel les informations de balise lumineuse comprennent en outre des informations de voie de véhicule comprenant une voie de déplacement sur laquelle le véhicule propre se déplace.

3. Système de détection de position de véhicule (10) selon la revendication 1 ou 2, dans lequel l'unité centrale de traitement (19), après que le moyen de communication avec balise lumineuse (14) a reçu les informations de coordonnées de position des informations de balise lumineuse, calcule la position du véhicule propre sur la base des informations de balise lumineuse reçues par le moyen de communication avec balise lumineuse (14) dans la condition prédéterminée et, en même temps, stocke la position du véhicule propre dans un moyen de mémoire (26) ou affiche la position calculée du véhicule propre sur une partie d'affichage (24).

4. Système de détection de position de véhicule (10) selon l'une quelconque des revendications précédentes, dans lequel les informations de coordonnées de position reçues par les informations de balise lumineuse présentent un point de base dans la condition prédéterminée.

5. Système de détection de position de véhicule (10) selon l'une quelconque des revendications précédentes, les informations de balise lumineuse contenant des faisceaux proches infrarouges.

6. Système de détection de position de véhicule (10) selon l'une quelconque des revendications précédentes, dans lequel l'unité centrale de traitement (19) inclut un moyen de communication (21) pour communiquer avec d'autres véhicules et étant conçu pour transmettre la position estimée du véhicule propre à l'environnement par intermittence.

7. Système de détection de position de véhicule (10) selon la revendication 6, le moyen de communication (21) étant conçu pour transmettre les informations de voie de véhicule propre conjointement avec la position du véhicule propre simultanément.

8. Système de détection de position de véhicule (10) selon la revendication 6 ou 7, dans lequel le moyen de communication (21) transmet un vecteur de position en déplacement du véhicule propre et les coordonnées de l'intersection de laquelle le véhicule propre s'approche conjointement avec un identifiant du véhicule.

9. Système de détection de position de véhicule (10) selon l'une quelconque des revendications 6 à 8, dans lequel l'unité centrale de traitement (19) inclut un moyen de prédiction d'approche de véhicule (27) qui réalise une prédiction d'approche du véhicule propre et d'autres véhicules sur la base de la position du véhicule propre qui est déterminée sur la base des informations de coordonnées de position des informations de balise lumineuse et d'une position d'autres véhicules qui est reçue par le moyen de communication (21) et est déterminée sur la base des informations de coordonnées de position des informations de balise lumineuse.

10. Système de détection de position de véhicule (10) selon l'une quelconque des revendications 6 à 9, dans lequel le moyen de prédiction d'approche de véhicule (27) est conçu pour prendre un échantillon de tous les véhicules ayant la possibilité de croiser le véhicule propre comme véhicules cibles sur la base d'un vecteur de position en déplacement du véhicule propre et des vecteurs de position en déplacement notifiés depuis les véhicules respectifs.

[Fig.1]

[Fig.2]

[Fig.3]

EP 1 906 202 B1

16

- 30
- 39
- 40 — communication means for communication with other vehicle
- 38 — ECU (central processing unit)
- 42 — HUD
- 31
- 32 — GPS receiving part (or D-GPS)
- 41 — vehicle information I/F
- 35 — INS
- 37: vehicle speed sensor
- 36 — gyro sensor
- 43 — sound information supply device
- 33
- 34 — light beacon communication means
- 44 — helmet
- 45 — sound receiver
- 46 — speaker
- 47 — memory means
- 48 — vehicle approaching prediction means

[Fig.4]

[Fig.5]

[Fig.6]

[Fig.7]

[Fig.8]

```
                    ┌──────────────┐
                    │    start     │
                    └──────────────┘
                            │
                            ▼
        ┌───────────────────────────────┐
        │      calculate own vehicle     │
        │    position by GPS position    │────S11
        │        measuring part          │
        └───────────────────────────────┘
                            │
                            ▼
        ┌───────────────────────────────┐
        │       estimate own vehicle     │
        │         position by INS        │────S12
        └───────────────────────────────┘
                            │
                            ▼
        ┌───────────────────────────────┐
        │  transmit own vehicle position to │
        │  surrounding by communication  │────S13
        │     means for communication    │
        │        with other vehicle      │
        └───────────────────────────────┘
                            │
                            ▼
                    ┌──────────────┐
                    │     end      │
                    └──────────────┘
```

[Fig.9]

```
           ┌──────────────┐
           │    start     │
           └──────────────┘
                  │
                  ▼
   ┌─────────────────────────────┐
   │ receive light beacon        │──── S21
   │ information by              │
   │ light beacon communication  │
   │ means                       │
   └─────────────────────────────┘
                  │
                  ▼
   ┌─────────────────────────────┐
   │ perform sampling processing │
   │ of respective information   │──── S22
   │ by light beacon             │
   │ communication means         │
   └─────────────────────────────┘
                  │
                  ▼
   ┌─────────────────────────────┐
   │ transmit sampled respective │
   │ information to central      │──── S23
   │ processing unit and/or INS  │
   └─────────────────────────────┘
                  │
                  ▼
   ┌─────────────────────────────┐
   │ estimate own vehicle        │──── S24
   │ position by INS             │
   └─────────────────────────────┘
                  │
                  ▼
   ┌─────────────────────────────┐
   │ transmit own vehicle        │
   │ position to surrounding by  │──── S25
   │ communication means         │
   │ for communication with      │
   │ other vehicle               │
   └─────────────────────────────┘
                  │
                  ▼
           ┌──────────────┐
           │     end      │
           └──────────────┘
```

[Fig.10]

[four-wheeled vehicle]　　　　　　　　　　[two-wheeled vehicle]

[Fig.11]

[Fig.12]

[four-wheeled vehicle]

start

**S51**
light beacon information received? — NO

YES — S52

transmit intersection coordinates and traveling position vector

**S53**
received? — NO

YES

**S54**
intersect own vehicle? — NO

YES

**S55**
counterpart being two-wheeled vehicle? — NO

YES — S56

display symbol with emphasis

**S57**
trajectory intersection condition satisfied? — NO

YES — S58

display attention drawing message

generate attention drawing sound — S59

end

[two-wheeled vehicle]

start

**S61**
light beacon information received? — NO

YES

**S62**
received? — NO

YES — S63

specify present position

**S64**
identify approaching intersection

**S65**
transmit traveling position vector and approaching intersection coordinates

**S66**
display attention drawing message

**S67**
generate attention drawing sound

end

25

**EP 1 906 202 B1**

## REFERENCES CITED IN THE DESCRIPTION

**Patent documents cited in the description**

- JP 3773040 B
- US 6405132 B1
- US 6349259 B1